# EUROPEAN PATENT SPECIFICATION

(11) **EP 2 876 027 B1**
(45) Date of publication and mention of the grant of the patent: **20.02.2019**
(21) Application number: 14188796.8
(22) Date of filing: 14.10.2014
(51) Int. Cl.: B62J 6/02, B62J 17/02

(54) **SADDLE-RIDE TYPE VEHICLE**
SATTELFAHRZEUG
VÉHICULE DE TYPE À SELLE

(30) Priority: 20.11.2013 JP 2013239869; 01.07.2014 JP 2014135932
(43) Date of publication of application: 27.05.2015
(60) Divisional application: 19151119.5
(73) Proprietor: Yamaha Hatsudoki Kabushiki Kaisha, Iwata-shi, Shizuoka 438-8501 (JP)
(72) Inventor: Kawasaki, Yasuhiro, Iwata-shi, Shizuoka 438-8501 (JP); Okabe, Toshihiko, Iwata-shi, Shizuoka 438-8501 (JP)
(74) Representative: Grünecker Patent- und Rechtsanwälte PartG mbB

(56) References cited:
- JP-A- 2007 186 044
- JP-A- 2011 148 451

## Description

The present invention relates to a saddle-ride type vehicle according to the preamble of independent claim 1. Such a saddle-ride type vehicle can be taken from the prior art document JP-2007-186044 A**.**

A so-called sport saddle-ride type vehicle includes a front cover member and a large side cover member. The front cover member is a member in which a light is disposed. The side cover member extends from the front cover to laterally outside of an engine. Air resistance during travelling can be reduced by the aforementioned front cover member and side cover member. Further, it is desirable to compactly produce the front cover member in order to reduce air resistance during travelling as much as possible. To achieve this, for instance, the dimension of the front cover member from its lower end to its upper end is designed to be less than the dimension from the lower end of a front wheel to the lower end of the front cover member.

Prior art document JP-2007-186044 A discloses a motorcycle, comprising a head light, a head pipe being disposed in a middle of the vehicle in a vehicle width direction. A front fork device includes a steering shaft inserted into the head pipe and extending more downward than the head pipe. A handle member is connected to the steering shaft. A front wheel is supported by the front fork device and an engine is disposed rearward of the front wheel. A pair of right and left lights is disposed in the front cover member (front cowl). At least one side cover member is attached to the front cover member, backwardly extending from the front cover member and being disposed laterally outward of at least a portion of the engine. The motorcycle is provided with the front cowl having an engagement part and covering a front side of a vehicle body. A screen has an engagement part engaged with the engagement part of the front cowl. A stay is mounted to the vehicle body and supporting a rear view mirror. The rear view mirror is mounted to the stay in the state that the front cowl and the screen are clamped between the stay and it.

Prior art document JP-2011-148451 A also discloses a saddle-riding type vehicle, comprising a head light, a head pipe being disposed in a middle of the vehicle in a vehicle width direction. A front fork device includes a steering shaft inserted into the head pipe and extending more downward than the head pipe. A handle member is connected to the steering shaft. A front wheel is supported by the front fork device and an engine is disposed rearward of the front wheel. A pair of right and left lights is disposed in the front cover member (front cowl). At least one side cover member is attached to the front cover member, backwardly extending from the front cover member and being disposed laterally outward of at least a portion of the engine. The front structure of the saddle-riding type vehicle suppresses the increase in the width of the front cowl even when the light emission surfaces of headlights are enlarged in a vehicle width direction. A part of the front cowl is made into a duct, and a pair of right and left lower straightening vane sections extend outward in the vehicle width direction from a lower part of the duct. The right and left headlights are disposed along the duct and the lower straightening vane sections.

Further, the sport saddle-ride type vehicle has a structure that the front cover member is disposed forward of a handle member. Thus, a larger amount of wind can be led to the engine and so forth located rearward of the front wheel by disposing the compact front cover member in a relatively high position.

As described above, the front cover member, included in the sport saddle-ride type vehicle, preferably has a compact size. When thus having a compact size, the front cover member generally has an integrated structure as with the one included in a motorcycle described in, for instance, Japan Laid-open Patent Application Publication No. JP-A-2009-262914.

However, it has been noticed that even such a compact front cover member included in a sport saddle-ride type vehicle is advantageous when having a split structure.

First, from the perspective of enhancement in maintenance and so forth, it is preferable for the front cover member to be easily detachable from a vehicle body. This is because a large space can be reliably produced for making components of the vehicle body accessible by detaching the front cover member from the vehicle. However, the front cover member cannot be easily detached from the vehicle body when being integrally formed as with the one included in the well-known saddle-ride type vehicle.

In view of the above, it has been conceived of a front cover member structure. In the conceived structure, the front cover member is split up and down into a first front cover and a second front cover. The first front cover is positioned over the second front cover, and is detachable from the vehicle body. The front cover member structure herein conceived is more advantageous than the well-known one designed to be entirely detached from the vehicle body in that only the first front cover is easily detachable from the vehicle body.

There was an idea of enlarging the first front cover so as to reliably produce a large space after detachment of the first front cover even when the front cover member has a compact size.

However, the front cover member for the sport saddle-ride type vehicle generally has a compact size. Thus, when the first front cover is enlarged, the second front cover is accordingly reduced. In this case, remarkable degradation in stiffness is inevitable for the second front cover. Moreover, the side cover member is designed to be attached to the second front cover. The side cover member has a relatively large size and extends to laterally outside of the engine. Therefore, degradation in stiffness is not preferable for the second front cover in consideration of vibrations of the side cover member and so forth. However, when the second front cover is simply enlarged for reliably obtaining stiffness required for the second front cover, the first front cover is accordingly reduced. Thus, the space produced after detachment of the first front cover is inevitably reduced. Furthermore, a drawback is produced that the front cover member is entirely enlarged in attempting to achieve both objectives of reliably producing a large space after detachment of the first front cover and reliably obtaining stiffness required for the second front cover.

It is an object of the present invention to provide a saddle-ride type vehicle with high advantage obtained by splitting a front cover member and simultaneously inhibit degradation in stiffness of the front cover member in a so-called sport saddle-ride type vehicle. According to the present invention said object is solved by a saddle-ride type vehicle having the features of independent claim 1. Preferred embodiments are laid down in the dependent claims.

Accordingly, it is provided a saddle-ride type vehicle as defined in independent claim 1.

In the saddle-ride type vehicle according to the present aspect, the dimension of the first front cover in the vehicle up-and-down direction is greater than the dimension of the second front cover in the vehicle up-and-down direction. Thus, a large space can be reliably produced after detachment of the first front cover.

Further in the vehicle front view, each of the upper edges of the right and left lights tilt down from the outer lateral end of the upper edge toward the middle of the vehicle in the vehicle width direction. Thus, the middle portion of the front cover member in the vehicle width direction can be reliably produced so as to have a large dimension in the up-and-down direction. With such preferred layouts of the right and left lights, the first front cover can be produced so as to have a large dimension in the vehicle up-and-down direction. Especially, the head pipe is located rearward of the middle portion of the front cover member in the vehicle width direction. Thus, while the front cover member is attached to the vehicle, a limited space is available for accessing to components disposed in the surrounding of the front cover member. By contrast, in the saddle-ride type vehicle according to the present aspect, a large space can be reliably produced by detachment of the first front cover.

Further, the intermediate portion of the second front cover is disposed between the right light and the left light, and extends more upward than the inner lateral ends of the lower edges of the right and left lights. Hence, the second front cover can be enhanced in its stiffness in comparison with that having a flat shape without the intermediate portion. Yet further, the intermediate portion of the second front cover is located between the right light and the left light. In other words, the intermediate portion of the second front cover is located in the middle of the front cover member in the vehicle width direction. As described above, in the middle portion of the front cover member, the first front cover is enabled to have a large up-and-down dimension by the preferred layouts of the right and left lights. Therefore, it is possible to provide the intermediate portion for inhibiting degradation in stiffness of the second front cover and to reliably produce a large space after detachment of the first front cover.

Preferably, the intermediate portion includes a recess extending rearward. In the structure, the second front cover can be further enhanced in its stiffness. Further, even with the recess extending rearward, a large space can be reliably produced by detachment of the first front cover.

Preferably, the intermediate portion includes a front surface tilting obliquely upward to front in a vehicle side view. In the structure, it is possible to compactly form a lower region of the intermediate portion in the back-and-forth direction and to enlarge the space located over the intermediate portion.

The second front cover includes a right lateral portion located rightward of the right light and a left lateral portion located leftward of the left light. In the structure, the second front cover can be enhanced in its stiffness by the right lateral portion and the left lateral portion.

An upper end of the intermediate portion of the second front cover is located lower than an upper end of the left lateral portion and an upper end of the right lateral portion. In the structure, a larger space can be reliably produced after detachment of the first front cover.

Preferably, each of the right lateral portion and the left lateral portion has a bent shape. In the structure, the second front cover can be further enhanced in its stiffness by the right lateral portion and the left lateral portion.

Preferably, the first front cover is a painted component, whereas the second front cover is an unpainted component. Further, the left lateral portion of the second front cover preferably protrudes more leftward than a left lateral end of the first front cover. Yet further, the right lateral portion of the second front cover preferably protrudes more rightward than a right lateral end of the first front cover. In the structure, the second front cover can be enhanced in its stiffness by the shape of the right lateral portion and that of the left lateral portion. Further, when the vehicle falls down, for instance, either the right lateral portion or the left lateral portion makes contact with the road earlier than the first front cover does. Thus, the painting of the first front cover can be protected.

Preferably, each of the right lateral portion and the left lateral portion includes a recess. In the structure, the second front cover can be further enhanced in its stiffness.

The second front cover includes an upper portion located over the right light and the left light and a lower portion located under the right light and the left light. Further, the right lateral portion, the left lateral portion and the intermediate portion respectively couple the upper portion and the lower portion. In the structure, the second front cover can be further enhanced in its stiffness.

Preferably, the upper portion of the second front cover at least partially overlaps with the first front cover in the vehicle front view. In the structure, the second front cover can be enhanced in its stiffness, and simultaneously, the front cover member can be compactly produced.

Preferably, each of the right light and the left light includes a front surface tilting obliquely upward to front in a vehicle side view. In the structure, the space located over the right light and the left light can be enlarged.

Preferably, an upper end of the first front cover is located higher than an upper end of the second front cover. In the structure, the height of the front cover member can be lowered by detaching the first front cover from the vehicle. Thus, the height of the vehicle can be lowered by detachment of the first front cover, for instance, in packing.

Preferably, the first front cover includes a windshield screen. In the structure, the windshield screen together with the first front cover can be easily replaced. Thus, the height of the first front cover, for instance, can be easily changed.

### Advantageous Effects of Invention

According to the present teaching, it is possible to maximize an advantage to be obtained by splitting a front cover member and inhibit degradation in stiffness of the front cover member in a so-called sport saddle-ride type vehicle.

### BRIEF DESCRIPTION OF THE DRAWINGS

Referring now to the attached drawings which form a portion of this original disclosure:
FIG. 1 is a side view of a saddle-ride type vehicle;
FIG. 2 is a front view of the saddle-ride type vehicle;
FIG. 3 is a plan view of the saddle-ride type vehicle;
FIG. 4 is a front view of a front fork device;
FIG. 5 is a front view of a front cover member and right and left lights;
FIG. 6 is a side view of the front cover member and the right and left lights;
FIG. 7 is an exploded perspective view of the front cover and the right and left lights;
FIG. 8 is a perspective view illustrating a condition that a headlight unit is attached to a second front cover;
FIG. 9 is a front view of the second front cover;
FIG. 10 is a partial front view of a front potion of the saddle-ride type vehicle; and
FIG. 11 is a front view of a front cover member and right and left lights according to another exemplary embodiment of a saddle-ride type vehicle which does not belong to the present invention.

### DETAILED DESCRIPTION OF THE EMBODIMENTS

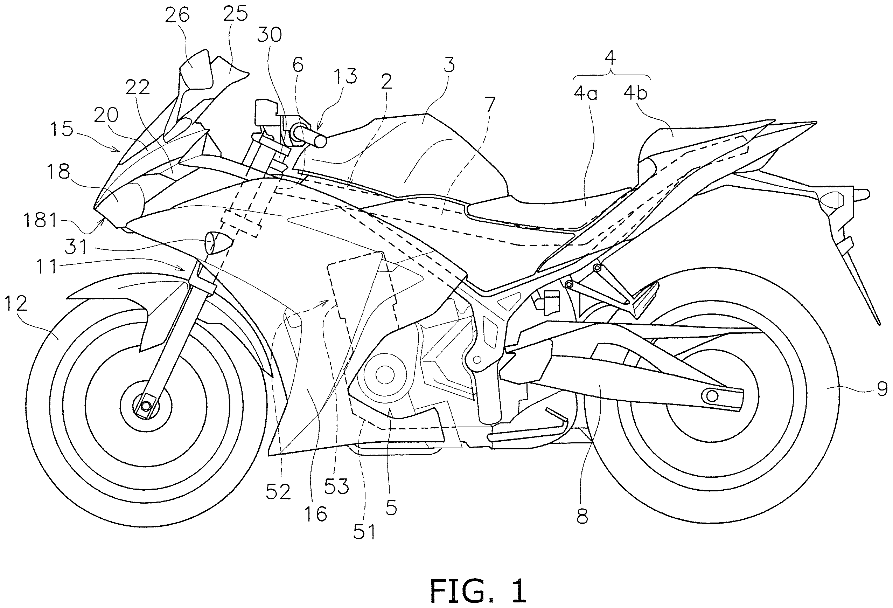

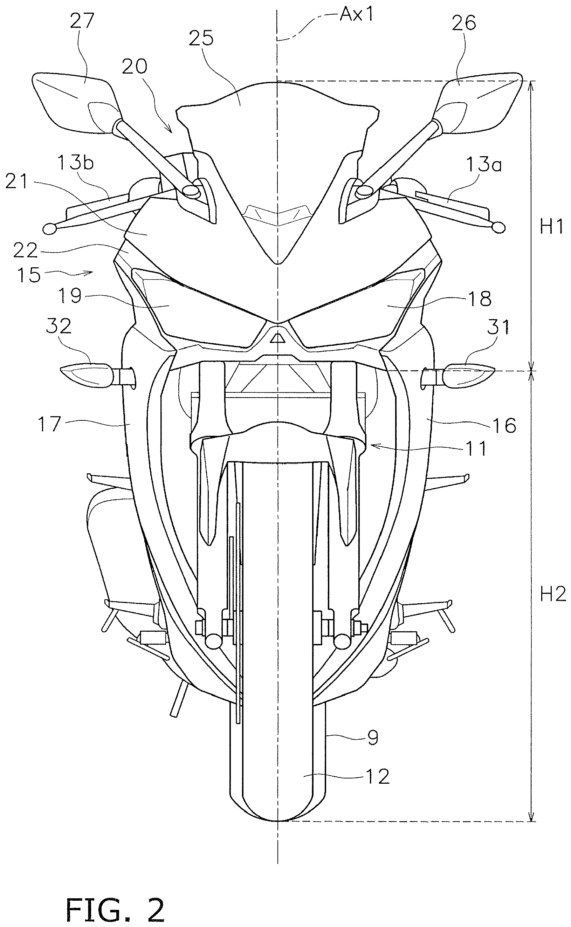

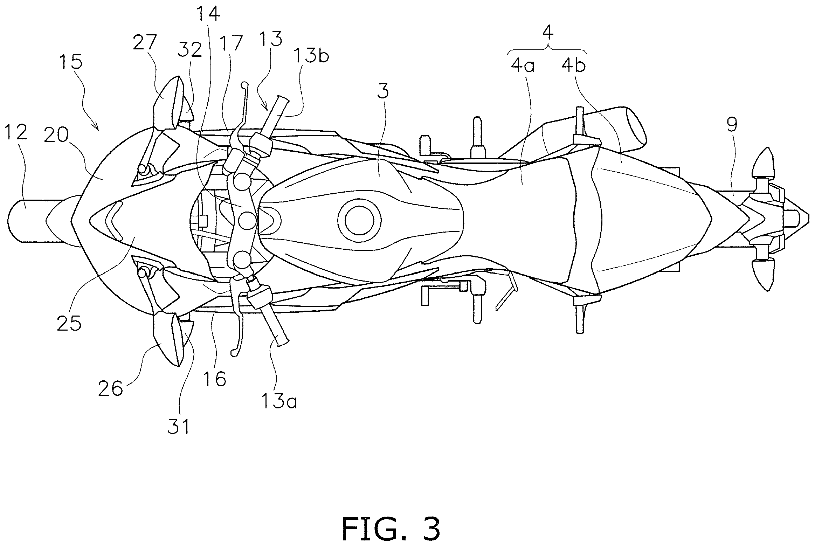

With reference to the attached drawings, explanation will be hereinafter made for a saddle-ride type vehicle 1 according to an exemplary embodiment. FIG. 1 is a side view of the saddle-ride type vehicle 1. FIG. 2 is a front view of the saddle-ride type vehicle 1. FIG. 3 is a plan view of the saddle-ride type vehicle 1. The saddle-ride type vehicle 1 is a so-called sport motorcycle. As illustrated in FIG. 1, the saddle-ride type vehicle 1 includes a frame 2, a fuel tank 3, a seat 4 and an engine 5.

The frame 2 includes a head pipe 6 and a main frame 7. The head pipe 6 is disposed in the middle of the vehicle in a vehicle width direction. The main frame 7 is disposed rearward of the head pipe 6, while being connected to the head pipe 6.

The fuel tank 3 is disposed rearward of the head pipe 6. The fuel tank 3 is disposed over the main frame 7. The seat 4 is disposed rearward of the fuel tank 3. The seat 4 is disposed over the main frame 7. The engine 5 is disposed under the fuel tank 3. The engine 5 is also supported by the main frame 7. The engine 5 includes a clank case 51 and a cylinder member 52. The cylinder member 52 includes a cylinder head 53. It should be noted that directional terms "front", "rear", "right" and "left" and their related terms refer to directions seen from a rider seated on the seat 4 in the present exemplary embodiment.

The saddle-ride type vehicle 1 includes a rear arm 8 and a rear wheel 9. The rear arm 8 is pivotably attached to the main frame 7. The rear wheel 9 is disposed rearward of the engine 5, and is supported by the main frame 7 through the rear arm 8.

The seat 4 includes a main seat 4a and a rear seat 4b. The main seat 4a is disposed rearward of the fuel tank 3. The rear seat 4b is disposed rearward of the main seat 4a. The upper surface of the rear seat 4b is located higher than that of the main seat 4a. It should be noted that the seat 4 illustrated in FIG. 1 is a separation-type seat composed of the main seat 4a and the rear seat 4b as discrete members. Alternatively, the seat 4 may be of a type that the main seat 4a and the rear seat 4b are integrated.

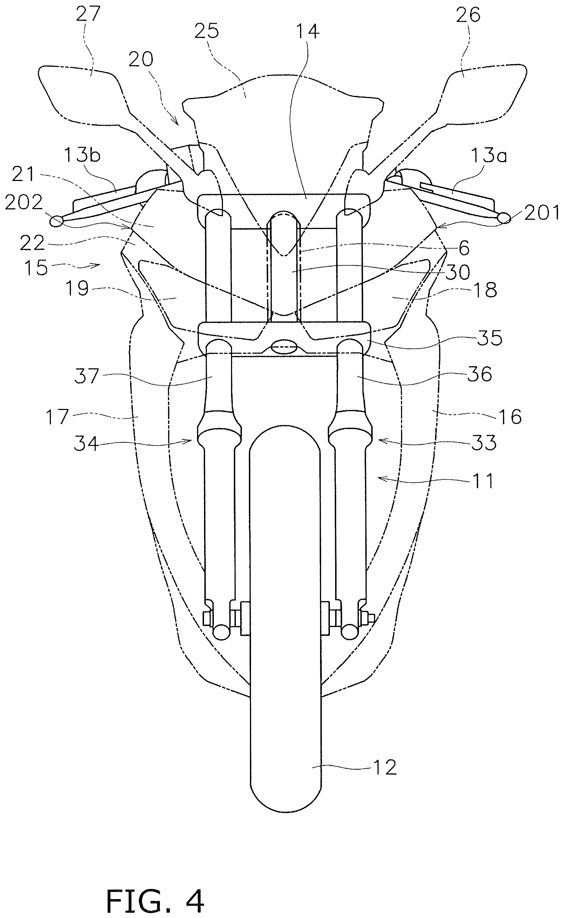

The saddle-ride type vehicle 1 includes a front fork device 11 and a front wheel 12. FIG. 4 is a front view of the front fork device 11 and the front wheel 12. As illustrated in FIG. 4, the front fork device 11 extends more downward than the head pipe 6. The front fork device 11 includes a steering shaft 30, a left shock absorber 33, a right shock absorber 34 and an under bridge 35. The steering shaft 30 is inserted through the head pipe 6 so as to be rotatable about the center axis of the head pipe 6. The left shock absorber 33 includes a left fork pipe 36. The right shock absorber 34 includes a right fork pipe 37. The under bridge 35 couple the left fork pipe 36 and the right fork pipe 37. The under bridge 35 is disposed under the head pipe 6. The front wheel 12 is rotatably supported by the lower portion of the front fork device 11. Specifically, the front wheel 12 is rotatably supported by the left shock absorber 33 and the right shock absorber 34. The engine 5 is disposed rearward of the front wheel 12.

The saddle-ride type vehicle 1 includes a handle member 13. The handle member 13 is coupled to the steering shaft 30. As illustrated in FIG. 3, the handle member 13 includes a left handle member 13a, a right handle member 13b and a top bridge 14. The left handle member 13a and the right handle member 13b are discrete members coupled to the steering shaft 30 through the top bridge 14. As illustrated in FIG. 4, the top bridge 14 is disposed over the head pipe 6. The top bridge 14 couples the steering shaft 30 and the top ends of the right and left shock absorbers 34 and 33. It should be noted that in the present exemplary embodiment, the handle member 13 is of a so-called separation type but may be of a so-called bar handle type that the right and left handle members 13b and 13a are integrated.

The saddle-ride type vehicle 1 is of a so-called full cowl type including a front cover member 15, a first side cover member 16 and a second side cover member 17. The front cover member 15 is disposed forward of the head pipe 6 and the handle member 13. The front cover member 15 is disposed forward of at least a portion of the top bridge 14. In other words, the front cover member 15 overlaps with at least a portion of the top bridge 14 in a vehicle front view. The front cover member 15 is disposed forward of at least a portion of the under bridge 35. In other words, the front cover member 15 overlaps with at least a portion of the under bridge 35 in the vehicle front view. As illustrated in FIG. 2, a dimension H1 from the lower end of the front cover member 15 to the upper end of the front cover member 15 is less than a dimension H2 from the lower end of the front wheel 12 to the lower end of the front cover member 15.

The first side cover member 16 and the second side cover member 17 are respectively attached to the front cover member 15. The first side cover member 16 and the second side cover member 17 respectively extend rearward from the front cover member 15. The first side cover member 16 and the second side cover member 17 are disposed laterally outside of the engine 5. When described in detail, the first side cover member 16 is disposed laterally leftward of the engine 5, whereas the second side cover member 17 is disposed laterally rightward of the engine 5. Further, the first side cover member 16 and the second side cover member 17 are disposed laterally outside of the front fork device 11. When described in detail, the first side cover member 16 is disposed laterally leftward of the front fork device 11, whereas the second side cover member 17 is disposed laterally rightward of the front fork device 11. A first flasher 31 is disposed in the first side cover member 16. On the other hand, a second flasher 32 is disposed in the second side cover member 17.

The lower end of the first side cover member 16 is located lower than the rotational center of the front wheel 12. The lower end of the second side cover member 17 is also located lower than the rotational center of the front wheel 12. In other words, the first side cover member 16 extends to a position lower than the rotational center of the front wheel 12. The second side cover member 17 extends to a position lower than the rotational center of the front wheel 12. Further, the lower end of the first side cover member 16 is located lower than the engine 5. The lower end of the second side cover member 17 is located lower than the engine 5.

A left light 18 and a right light 19 are disposed in the front cover member 15. The left light 18 and the right light 19 are disposed away from each other in the vehicle width direction. As illustrated in the vehicle side view of FIG. 1, a front surface 181 of the left light 18 tilts obliquely upward to the front. Likewise, the front surface of the right light 19 tilts obliquely upward to the front, although not illustrated in the drawings.

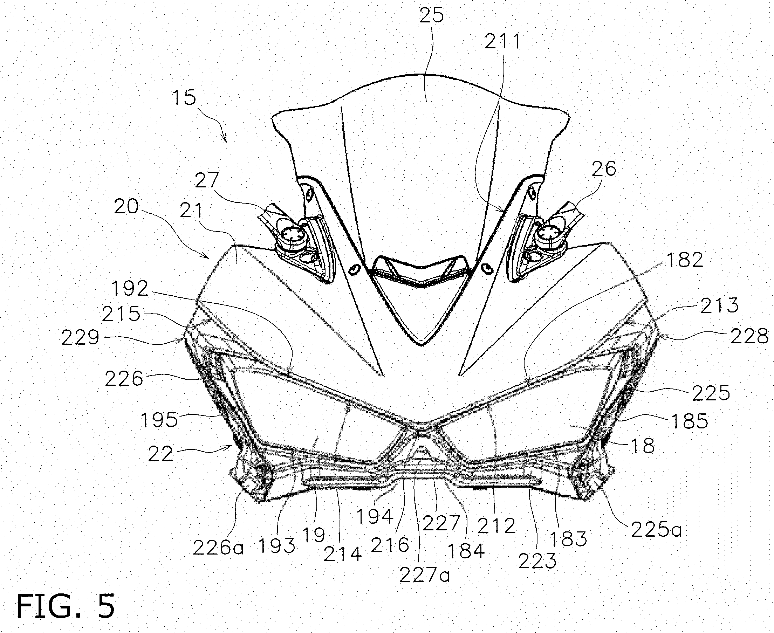

FIG. 5 is a front view of the front cover member 15, the left light 18 and the right light 19. As illustrated in the vehicle front view of FIG. 5, an upper edge 182 of the left light 18 tilts down from the outer lateral end of the upper edge 182 toward the middle of the vehicle in the vehicle width direction. In the vehicle front view, a lower edge 183 of the left light 18 tilts down from the outer lateral end of the lower edge 183 toward the middle of the vehicle in the vehicle width direction. In the vehicle front view, an upper edge 192 of the right light 19 tilts down from the outer lateral end of the upper edge 192 toward the middle of the vehicle in the vehicle width direction. In the vehicle front view, a lower edge 193 of the right light 19 also tilts down from the outer lateral end of the lower edge 193 toward the middle of the vehicle in the vehicle width direction.

It should be noted that in the present exemplary embodiment, the term "outer lateral end" refers to a lateral end located outside in the vehicle width direction. On the other hand, the term "inner lateral end" refers to a lateral end located inside in the vehicle width direction. Further, the term "inward" in the vehicle width direction refers to a direction oriented toward a center line Ax1 (see FIG. 2). The center line Ax1 is a line that extends in the up-and-down direction and passes through the center of the vehicle in the vehicle width direction. On the other hand, the term "outward" in the vehicle width direction refers to a direction oriented oppositely to a direction indicated by the term "inward" in the vehicle width direction. In other words, the term "outward" in the vehicle width direction refers to a direction oriented oppositely to the center line Ax1 that extends in the up-and-down direction and passes through the center of the vehicle in the vehicle width direction.

An inner lateral edge 184 of the left light 18 and an inner lateral edge 194 of the right light 19 tilt up toward the center of the front cover member 15 in the vehicle width direction. In other words, the inner lateral edge 184 of the left light 18 and the inner lateral edge 194 of the right light 19 tilt to each other such that the distance between the inner lateral edge 184 of the left light 18 and the inner lateral edge 194 of the right light 19 is reduced to the upward. An outer lateral edge 185 of the left light 18 and an outer lateral edge 195 of the right light 19 tilt down toward the center of the front cover member 15 in the vehicle width direction.

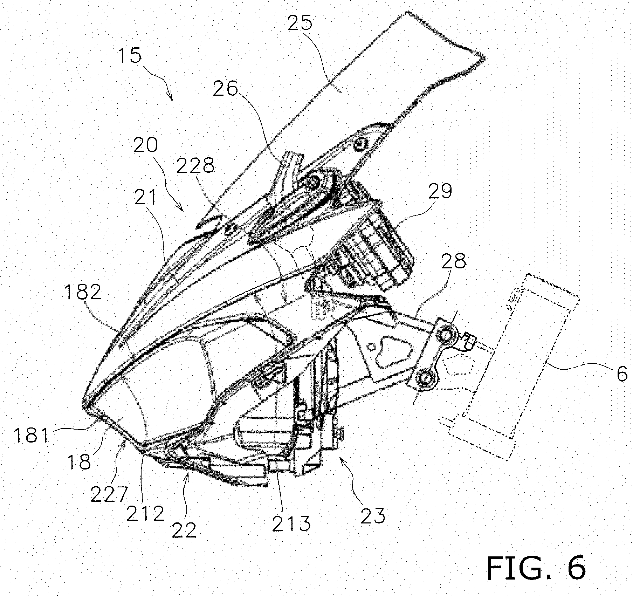

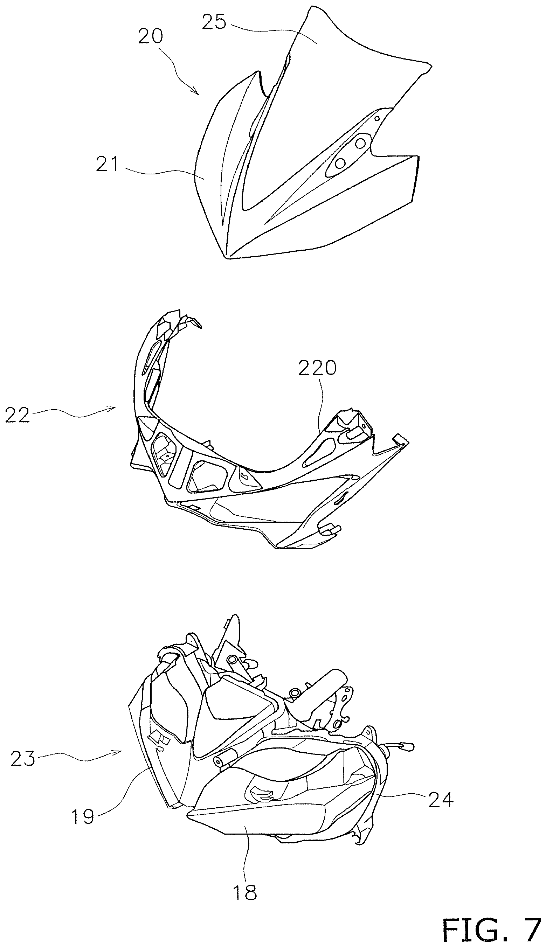

FIG. 6 is a side view of the front cover member 15. FIG. 7 is an exploded perspective view of the front cover member 15. As illustrated in FIGS. 5 to 7, the front cover member 15 includes a first front cover 20 and a second front cover 22. The second front cover 22 is a discrete member provided separately from the first front cover 20.

It should be noted that as illustrated in FIG. 7, the saddle-ride type vehicle 1 includes a headlight unit 23. The headlight unit 23 includes the aforementioned left light 18 and right light 19. The left light 18 and the right light 19 are coupled to each other through a light body 24.

The first front cover 20 is located over the left light 18 and the right light 19. As illustrated in the vehicle front view of FIG. 4, the left lateral end 201 and the right lateral end 202 of the first front cover 20 are located outward of the top bridge 14 in the vehicle width direction. The left lateral end 201 and the right lateral end 202 of the first front cover 20 are located outward of the left light 18 and the right light 19 in the vehicle width direction. The first front cover 20 is disposed forward of at least a portion of the top bridge 14. In other words, the first front cover 20 overlaps with at least a portion of the top bridge 14 in the vehicle front view.

As illustrated in FIG. 7, the first front cover 20 includes a cover portion 21 and a windshield screen 25. A left back mirror 26 and a right back mirror 27 are attached to the cover portion 21. The cover portion 21 is formed by an opaque member. The cover portion 21 is a painted component. It should be noted that the cover portion 21 may be entirely formed by an opaque member. Alternatively, the cover portion 21 may partially include a transparent member.

As illustrated in FIG. 5, the cover portion 21 includes a recess 211 on the upper edge thereof. The recess 211 recesses downward. The windshield screen 25 is attached to the cover portion 21 so as to be fitted into the recess 211. The lower edge of the cover portion 21, i.e., the lower edge of the first front cover 20 includes a first tilt edge portion 212 and a second tilt edge portion 213.

The first tilt edge portion 212 is located leftward of the center of the first front cover 20 in the vehicle width direction (hereinafter simply referred to as "a center"). The first tilt edge portion 212 is disposed roughly along the upper edge 182 of the left light 18. The first tilt edge portion 212 tilts down toward the center of the first front cover 20 in the vehicle front view.

The second tilt edge portion 213 continues to the first tilt edge portion 212. In the vehicle front view, the second tilt edge portion 213 is located laterally outward of the first tilt edge portion 212. The second tilt edge portion 213 tilts down toward the center of the first front cover 20 in the vehicle front view. The slope angle of the second tilt edge portion 213 with respect to the vehicle width direction is greater than that of the first tilt edge portion 212 with respect to the vehicle width direction.

The lower edge of the first front cover 20 includes a third tilt edge portion 214 and a fourth tilt edge portion 215. The third tilt edge portion 214 has a shape bilaterally symmetric to the first tilt edge portion 212. The third tilt edge portion 214 is located rightward of the center of the first front cover 20. The third tilt edge portion 214 is disposed roughly along the upper edge 192 of the right light 19. The third tilt edge portion 214 tilts down toward the center in the vehicle front view.

The fourth tilt edge portion 215 has a shape bilaterally symmetric to the second tilt edge portion 213. The fourth tilt edge portion 215 continues to the third tilt edge portion 214. The fourth tilt edge portion 215 is located laterally outward of the third tilt edge portion 214 in the vehicle front view. The fourth tilt edge portion 215 tilts down toward the center of the first front cover 20 in the vehicle front view. The slope angle of the fourth tilt edge portion 215 with respect to the vehicle width direction is greater than that of the third tilt edge portion 214 with respect to the vehicle width direction.

The lower edge of the first front cover 20 has a shape tapering downward. A center portion 216 of the lower edge of the first front cover 20 in the vehicle width direction has a convex shape bending downward in the vehicle front view. The center portion 216 is located lowest among the portions composing the first front cover 20 in the vehicle front view. The center portion 216 is located between the inner lateral end of the upper edge 182 of the left light 18 and the inner lateral end of the upper edge 192 of the right light 19 in the vehicle front view. The center portion 216 is located lower than the inner lateral end of the upper edge 182 of the left light 18 and the inner lateral end of the upper edge 192 of the right light 19 in the vehicle front view.

The second front cover 22 is an unpainted component. The second front cover 22 is disposed forward of at least a portion of the under bridge 35. In other words, as illustrated in the vehicle front view of FIG. 4, the second front cover 22 overlaps with at least a portion of the under bridge 35. The first side cover member 16 and the second side cover member 17 are attached to the second front cover 22. The left light 18 and the right light 19 are attached to the second front cover 22.

When described in detail, the headlight unit 23 is attached to the second front cover 22. In other words, the second front cover 22 supports the headlight unit 23. As illustrated in FIG. 7, the second front cover 22 includes an upper opening 220. In the vehicle front view, the upper opening 220 has a shape downwardly recessing from the upper edge of the second front cover 22. While being attached to the second front cover 22, the first front cover 20 covers the upper opening 220 of the second front cover 22 from the front side.

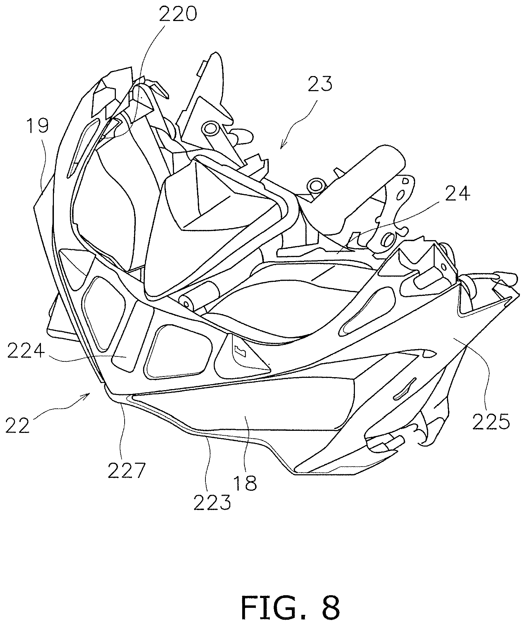

FIG. 8 is a perspective view illustrating a condition that the headlight unit 23 is attached to the second front cover 22. As illustrated in FIG. 8, the headlight unit 23 is partially exposed through the upper opening 220 of the second front cover 22, while the first front cover 20 is detached from the second front cover 22.

As illustrated in FIG. 6, the second front cover 22 is supported by the head pipe 6 through a bracket 28. A speed meter 29 is attached to the bracket 28. The speed meter 29 is disposed rearward of the first front cover 20.

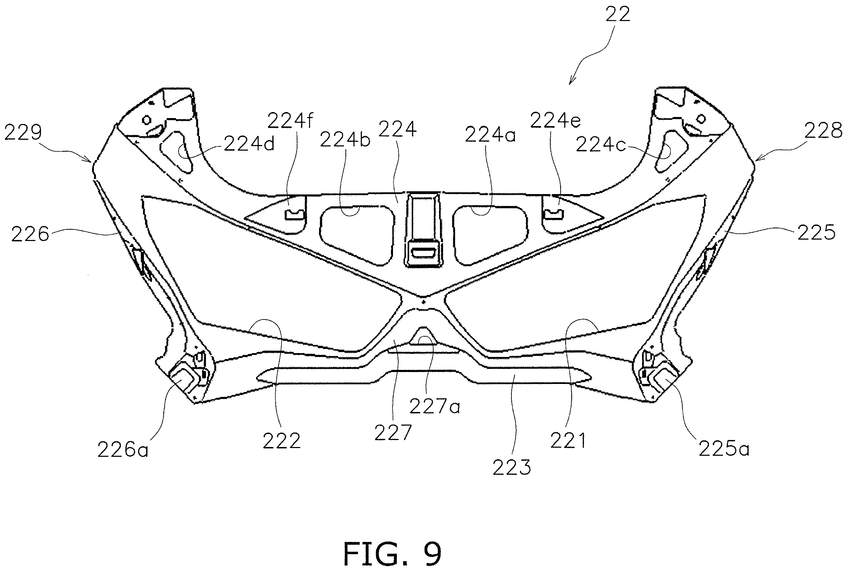

The second front cover 22 has a shape covering the surrounding of the left light 18 and that of the right light 19. FIG. 9 is a front view of the second front cover 22. The second front cover 22 includes a first opening 221 and a second opening 222. The left light 18 is attached to the second front cover 22 so as to be exposed to the outside through the first opening 221. The right light 19 is attached to the second front cover 22 so as to be exposed to the outside through the second opening 222.

When described in detail, the second front cover 22 includes a lower portion 223, an upper portion 224, a left lateral portion 225, a right lateral portion 226 and an intermediate portion 227. The lower portion 223 is located under the left light 18 and the right light 19. The upper portion 224 is located over the left light 18 and the right light 19. The upper portion 224 includes a plurality of openings 224a, 224b, 224c and 224d. Further, the upper portion 224 includes a plurality of recesses 224e and 224f.

As illustrated in FIG. 5, the left lateral portion 225 is located leftward of the left light 18. The right lateral portion 226 is located rightward of the right light 19. The left lateral portion 225 and the right lateral portion 226 couple the lower portion 223 and the upper portion 224. Each of the left lateral portion 225 and the right lateral portion 226 has a convex shape bending laterally outward. When described in detail, the left lateral portion 225 includes a left shoulder portion 228 bending laterally leftward in a convex shape. The right lateral portion 226 includes a right shoulder portion 229 bending laterally rightward in a convex shape. The left shoulder portion 228 protrudes more leftward than the left lateral end of the first front cover 20. The right shoulder portion 229 protrudes more rightward than the right lateral end of the first front cover 20.

The left lateral portion 225 includes a left recess 225a. The right lateral portion 226 includes a right recess 226a. The first side cover member 16 is attached to the left lateral portion 225. The first side cover member 16 is attached to a region of the left lateral portion 225 that is located lower than the left shoulder portion 228. The second side cover member 17 is attached to the right lateral portion 226. The second side cover member 17 is attached to a region of the right lateral portion 226 that is located lower than the right shoulder portion 229.

The intermediate portion 227 extends more upward than the inner lateral end of the lower edge 183 of the left light 18 and the inner lateral end of the lower edge 193 of the right light 19 in the middle of the vehicle in the vehicle width direction. The intermediate portion 227 connects the upper portion 224 and the lower portion 223. The intermediate portion 227 is located between the inner lateral edge 184 of the left light 18 and the inner lateral edge 194 of the right light 19. The intermediate portion 227 has a shape along the inner lateral edge 184 of the left light 18 and the inner lateral edge 194 of the right light 19. The intermediate portion 227 has an upwardly tapering shape. The upper end of the intermediate portion 227 is located lower than the upper end of the left lateral portion 225 and the upper end of the right lateral portion 226.

The intermediate portion 227 includes a recess 227a. The recess 227a has an upwardly tapering shape in the vehicle front view. When described in detail, the recess 227a has a roughly triangular shape in the vehicle front view. The recess 227a is made in the form of an aperture penetrating back and forth the intermediate portion 227. As illustrated in FIG. 6, the front surface of the intermediate portion 227 tilts obliquely upward to the front in the vehicle side view.

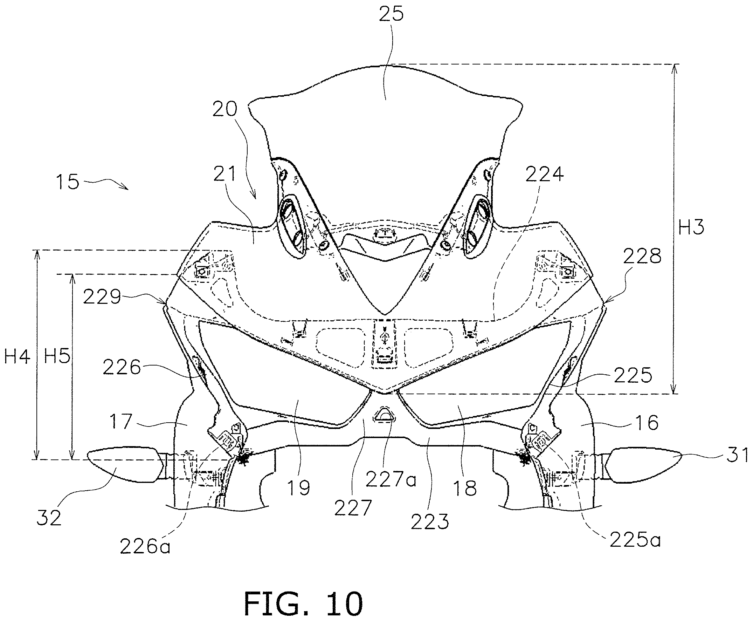

FIG. 10 is a partial front view of a front portion of the saddle-ride type vehicle 1. As illustrated in the vehicle front view of FIG. 10, the upper portion 224 of the second front cover 22 overlaps with the first front cover 20. The left lateral portion 225 of the second front cover 22 overlaps with a portion of the first side cover member 16 in the vehicle front view. The right lateral portion 226 of the second front cover 22 overlaps with a portion of the second side cover member 17 in the vehicle front view.

The left shoulder portion 228 is exposed to the outside in a position between the first front cover 20 and the first side cover member 16. The right shoulder portion 229 is exposed to the outside in a position between the first front cover 20 and the second side cover member 17. The intermediate portion 227 and the lower portion 223 are exposed to the outside.

As illustrated in the vehicle front view of FIG. 10, the dimension H3 of the first front cover 20 in the vehicle up-and-down direction is greater than the dimension H4 of the second front cover 22 in the vehicle up-and-down direction. The upper end of the first front cover 20 is located higher than the upper end of the second front cover 22. The lower end of the first front cover 20 is located lower than the upper end of the second front cover 22. The lower end of the first front cover 20 is located higher than the lower end of the second front cover 22. Further, when the appearance of the front cover member 15 is seen in the vehicle front view, the dimension H3 of the first front cover 20 in the vehicle up-and-down direction is greater than the dimension H5 of the second front cover 22 in the vehicle up-and-down direction. In other words, in the vehicle front view, the dimension H3 of the externally exposed region of the first front cover 20 in the vehicle up-and-down direction is greater than the dimension H5 of the externally exposed region of the second front cover 22 in the vehicle up-and-down direction.

The saddle-ride type vehicle 1 according to the present exemplary embodiment has the following features.

The front cover member 15 is disposed forward of the handle member 13. Thus, the compact front cover member 15 is disposed in a relatively high position. Hence, wind can be led as much as possible to the engine 5 and so forth located rearward of the front wheel 12. Further, a worker is not required to take a deeply bowing uncomfortable position in performing an attachment/detachment work of the front cover member 15. Therefore, attachment/detachment of the front cover member 15 can be easily done.

The first front cover 20 is a discrete member produced separately from the second front cover 22. Thus, it is possible to produce a large work space for components disposed in the surrounding of the front cover member 15 by detaching the first front cover 20 without entirely detaching the front cover member 15. For example, the speed meter 29 is disposed rearward of the first front cover 20. Therefore, the speed meter 29 is easily accessible from the front side of the vehicle by detachment of the first front cover 20. Further, the headlight unit 23 is partially exposed through the upper opening 220 of the second front cover 22, while the first front cover 20 is detached from the second front cover 22. Therefore, the headlight is easily accessible by detachment of the first front cover 20. Attachment/detachment of the speed meter 29 can be thereby easily done. Further or alternatively, harness layout within the front cover member 15 can be easily done. Yet further or alternatively, a maintenance work can be easily performed for the headlight unit 23. It should be noted that all the advantages effects as described above are not necessarily required to be achieved, and thus, at least one of them may be achieved.

Further, the dimension H3 of the first front cover 20 in the vehicle up-and-down direction is greater than the dimension H4 of the second front cover 22 in the vehicle up-and-down direction. Thus, a large space can be reliably produced after detachment of the first front cover 20.

In the vehicle front view, the upper edge 182 of the left light 18 tilts down from the outer lateral end thereof to the middle of the vehicle in the vehicle width direction. Further, in the vehicle front view, the upper edge 192 of the right light 19 tilts down from the outer lateral end thereof to the middle of the vehicle in the vehicle width direction. Yet further, the first front cover 20 is partially disposed between the upper edge 182 of the left light 18 and the upper edge 192 of the right light 19. Therefore, the middle portion of the first front cover 20 in the vehicle width direction is reliably enabled to have a large up-and-down dimension. Especially, the head pipe 6 is located rearward of the middle portion of the first front cover 20 in the vehicle width direction. Hence, while the front cover member 15 is attached, a limited space is available for accessing components covered with the front cover member 15. By contrast, in the saddle-ride type vehicle 1 according to the present exemplary embodiment, a large space for accessing the aforementioned components can be reliably produced by detachment of the first front cover 20.

The intermediate portion 227 of the second front cover 22 is disposed between the left light 18 and the right light 19 and extends more upward than the inner lateral end of the lower edge 183 of the left light 18 and the inner lateral end of the lower edge 193 of the right light 19. Thus, the second front cover 22 can be enhanced in its stiffness in comparison with the second front cover 22 having a flat shape without the intermediate portion 227. Further, as described above, the middle portion of the first front cover 20 in the vehicle width direction is reliably enabled to have a large up-and-down dimension due to the shape of the upper edge of the left light 18 and that of the upper edge of the right light 19. Based on the above, a large space can be reliably produced, and simultaneously, the intermediate portion 227 can be provided for inhibiting degradation in stiffness of the second front cover 22.

The intermediate portion 227 includes the recess 227a. The second front cover 22 can be thereby further enhanced in its stiffness. It should be noted that in the aforementioned exemplary embodiment, the recess 227a is made in the form of the aperture penetrating through the second front cover 22. However, the recess 227a may be closed without penetrating through the second front cover 22.

The front surface of the intermediate portion 227 tilts obliquely upward to the front in the vehicle side view. Hence, it is possible to enlarge the space located over the intermediate portion 227. Further, the upper end of the intermediate portion 227 is located lower than the upper end of the left lateral portion 225 and the upper end of the right lateral portion 226. Hence, it is possible to reliably further enlarge the space located over the intermediate portion 227.

The second front cover 22 includes the left lateral portion 225 and the right lateral portion 226. The left lateral portion 225, the right lateral portion 226 and the intermediate portion 227 respectively connect the upper portion 224 and the lower portion 223. Hence, the second front cover 22 can be further enhanced in its stiffness.

The cover portion 21 of the first front cover 20 is a painted component, whereas the second front cover 22 is an unpainted component. The left shoulder portion 228 of the second front cover 22 protrudes more leftward than the left lateral end of the first front cover 20. The right shoulder portion 229 of the second front cover 22 protrudes more rightward than the right lateral end of the first front cover 20. Thus, when the saddle-ride type vehicle 1 falls down, either the left shoulder portion 228 or the right shoulder portion 229 makes contact with the ground earlier than the first front cover 20 does. Based on the above, the second front cover 22 can be enhanced in its stiffness by the left shoulder portion 228 and the right shoulder portion 229, and further, the painting of the cover portion 21 can be protected by either the left shoulder portion 228 or the right shoulder portion 229 when the vehicle falls down.

The left lateral portion 225 includes the recess 225a, whereas the right lateral portion 226 includes the recess 226a. Therefore, the second front cover 22 can be further enhanced in its stiffness.

The front surface of the left light 18 and the front surface of the right light 19 tilt obliquely upward to the front in the vehicle side view. Therefore, the space located over the left light 18 and the right light 19 can be enlarged.

The upper end of the first front cover 20 is located higher than the upper end of the second front cover 22. Hence, the height of the front cover member 15 can be lowered by detaching the first front cover 20 from the vehicle. Consequently, the vehicle can be compactly packed by lowering the height of the vehicle through detachment of the first front cover 20.

The first front cover 20 includes the windshield screen 25. Thus, the windshield screen 25, together with the first front cover 20, can be easily replaced. Due to this, for instance, the height of the first front cover 20 can be easily changed.

One exemplary embodiment of the present teaching has been explained above.

The saddle-ride type vehicle of the present teaching is not limited to the motorcycle, and may be a vehicle equipped with three or more wheels.

The first side cover member 16 and the second side cover member 17 may have different shapes. The first side cover member 16 and the second side cover member 17 may be structured for covering not only a portion of the engine 5 but also the entirety of the engine 5 from the laterally outside. Only either of the first side cover member 16 and the second side cover member 17 may be attached to the front cover member 15. Alternatively, only either of the first side cover member 16 and the second side cover member 17 may be disposed laterally outside of at least a portion of the engine 5. Yet alternatively, either of the first side cover member 16 and the second side cover member 17 may not be provided. Each side cover member 16, 17 maybe composed of a single component, or alternatively, a plurality of components.

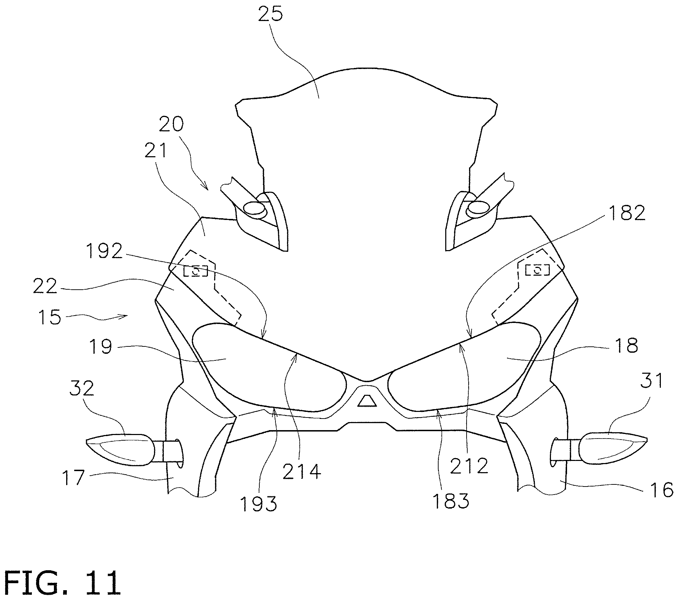

The arrangements and shapes of the first front cover 20 and the second front cover 22 may be changed without being limited to those in the aforementioned exemplary embodiment. For example, not only a portion of the first front cover 20 but also the entirety of the first front cover 20 may be located over the left light 18 and the right light 19. Not only a portion of the second front cover 22 but also the entirety of the second front cover 22 may be located under the left light 18 and the right light 19. The first front cover 20 may not include the windshield screen 25. Alternatively, as illustrated in FIG. 11, the windshield screen 25 may be formed by an opaque member similarly to the cover portion 21. The first front cover 20 may be an unpainted component. The second front cover 22 may be a painted component. The recess 227a of the intermediate portion 227 may be formed so as not to penetrate back and forth the intermediate portion 227.

The left light 18 and the right light 19 may not necessarily be the headlights, and may be flashers or position lights. Alternatively, the left light 18 and the right light 19 may further include flashers and/or position lights in addition to the headlights. The headlight unit 23 may not necessarily be attached to the second front cover 22, and may be attached to the first front cover 20.

The shapes of the left light 18 and the right light 19 are not limited to those in the aforementioned exemplary embodiment. For example, the upper edge 182 of the left light 18 and the upper edge 192 of the right light 19 may not necessarily have the straight shapes, and may have curved shapes. The lower edge 183 of the left light 18 and the lower edge 193 of the right light 19 may not necessarily have the straight shapes, and may have curved shapes. Each of the upper edge 182 of the left light 18 and the upper edge 192 of the right light 19 may have an arbitrary shape as long as at least the inner lateral end thereof is located lower than the outer lateral end thereof. For example, as illustrated in the vehicle front view of FIG. 11, each of the upper edge 182 of the left light 18 and the upper edge 192 of the right light 19 may include a portion upwardly extending from the outer lateral end of the upper edge 182, 192 to the middle of the vehicle in the vehicle width direction.

## Claims

1. A saddle-ride type vehicle, comprising a front cover member (15); a headlight unit (23) including a pair of right and left lights (19,18) being disposed in the front cover member (15);
a left back mirror (26) and a right back mirror (27);
a head pipe (6) being disposed in a middle of the vehicle in a vehicle width direction;
a front fork device (11) including a steering shaft (30) inserted into the head pipe (6) and extending more downward than the head pipe (6);
a handle member (13) being connected to the steering shaft (30);
a front wheel (12) being supported by the front fork device (11);
an engine (5) being disposed rearward of the front wheel (12);
at least one side cover member (16,17) being attached to the front cover member (15), backwardly extending from the front cover member (15) and being disposed laterally outward of at least a portion of the engine (5),
wherein a dimension (H1) from a lower end of the front cover member (15) to an upper end of the front cover member (15) is less than a dimension (H2) from a lower end of the front wheel (12) to the lower end of the front cover member (15),
in a vehicle front view, each of an upper edge (192) of the right light (19) and an upper edge (182) of the left light (18) tilts down from an outer lateral end of the upper edge (192, 182) toward the middle of the vehicle in the vehicle width direction,
the front cover member (15) includes a first front cover (20) and a second front cover (22) formed separately from the first front cover (20),
the first front cover (20) is at least partially located over the right light (19) and the left light (18),
the second front cover (22) is at least partially located under the right light (19) and the left light (18),
the second front cover (22) includes an upper opening (220) wherein, in the vehicle front view, the upper opening (220) has a shape downwardly recessing from the upper edge of the second front cover (22), and while being attached to the second front cover (22), the first front
cover (20) covers the upper opening (220) of the second front cover (22) from a front side,
the at least one side cover member (16,17) is attached to the second front cover (22), and
the second front cover (22) includes an intermediate portion (227) in the middle of the vehicle in the vehicle width direction, the intermediate portion (227) extending more upward than an inner lateral end of a lower edge (193) of the right light (19) and an inner lateral end of a lower edge (183) of the left light (18),
the second front cover (22) includes a right lateral portion (226) and a left lateral portion (225), the right lateral portion (226) being located rightward of the right light (19), the left lateral portion (225) being located leftward of the left light (18), and
an upper end of the intermediate portion (227) of the second front cover (22) is located lower than an upper end of the left lateral portion (225) and an upper end of the right lateral portion (226), the second front cover (22) includes an upper portion (224) located over the right light (19) and the left light (18) and a lower portion (223) located under the right light (19) and the left light (18), and the right lateral portion (226), the left lateral portion (225) and the intermediate portion (227) respectively couple the upper portion (224) and the lower portion (223), the front cover member (15) is disposed forward of the head pipe (6) and the handle member (13),
the left back mirror (26) and the right back mirror (27) are attached to a cover portion (21) of the first front cover (20),
a dimension (H3) of the first front cover (20) in a vehicle up-and-down direction is greater than a dimension (H4) of the second front cover (22) in the vehicle up-and-down direction, **characterized in that** the second front cover (22) supports the headlight unit (23) and the headlight unit (23) is partially exposed through the upper opening (220) of the second front cover (22), while the first front cover (20) is detached from the second front cover (22).

2. A saddle-ride type vehicle according to claim 1, **characterized in that** the intermediate portion (227) includes a recess (227a) extending rearward.

3. A saddle-ride type vehicle according to claim 1 or 2, **characterized in that** the intermediate portion (227) includes a front surface tilting obliquely upward to front in a vehicle side view.

4. A saddle-ride type vehicle according to any of claims 1 to 3, **characterized in that** each of the right lateral portion (226) and the left lateral portion (225) has a bent shape.

5. A saddle-ride type vehicle according to any of claims 1 to 4, **characterized in that** the first front cover (20) is a painted component,
the second front cover (22) is an unpainted component,
the left lateral portion (225) of the second front cover (22) protrudes more leftward than a left lateral end of the first front cover (20), and
the right lateral portion (226) of the second front cover (22) protrudes more rightward than a right lateral end of the first front cover (20).

6. A saddle-ride type vehicle according to any of claims 1 to 5, **characterized in that** each of the right lateral portion (226) and the left lateral portion (225) includes a recess (226a,225a).

7. A saddle-ride type vehicle according to any of claims 1 to 6, **characterized in that** the upper portion (224) of the second front cover (22) at least partially overlaps with the first front cover (20) in the vehicle front view.

8. A saddle-ride type vehicle according to any of claims 1 to 7, **characterized in that** each of the right light (19) and the left light (18) includes a front surface tilting obliquely upward to front in a vehicle side view.

9. A saddle-ride type vehicle according to any of claims 1 to 8, **characterized in that** an upper end of the first front cover (20) is located higher than an upper end of the second front cover (22).

10. A saddle-ride type vehicle according to any of claim 1 to 9, **characterized in that** the first front cover (20) includes a windshield screen (25).

11. A saddle-ride type vehicle according to any of claim 1 to 10, **characterized in that** a first side cover member (16) and a second side cover member (17) are respectively attached to the front cover member (15), respectively backwardly extending from the front cover member (15) and are disposed laterally outward of the
at least a portion of the engine (5),
the first side cover member (16) and second side cover member (17) are attached to the second front cover (22).

## Patentansprüche

1. Ein Sattel-Reit-Typ-Fahrzeug, das umfasst:
ein Vorder-Abdeck-Element (15);
eine Scheinwerfer-Einheit (23), die ein Paar von rechten und linken Leuchten (19, 18), beinhaltet, die in dem Vorder-Abdeck-Element (15) positioniert sind;
einen linken Rück-Spiegel (26) und einen rechten Rück-Spiegel (27);
ein Kopf-Rohr (6), das in einer Mitte des Fahrzeugs in der Fahrzeug-Breiten-Richtung positioniert ist;
eine Vorder-Gabel-Vorrichtung (11), die eine Lenk-Welle (30) beinhaltet, die in das Kopf-Rohr (6) eingesetzt ist und sich mehr nach unten erstreckt als das Kopf-Rohr (6);
ein Lenk-Element (13), das mit der Lenk-Welle (30) verbunden ist;
ein Vorder-Rad (12), das durch die Vorder-Gabel-Vorrichtung (11) gelagert ist;
einen Motor (5), der hinter dem Vorder-Rad (12) positioniert ist;
zumindest ein Seiten-Abdeck-Element (16, 17), das an dem Vorder-Abdeck-Element (15) angebracht ist, sich von dem Vorder-Abdeck-Element (15) nach hinten erstreckt und quer außerhalb von zumindest einem Abschnitt des Motors (5) positioniert ist,
wobei eine Abmessung (H1) von einem unteren Ende von dem Vorder-Abdeck-Element (15) zu einem oberen Ende von dem Vorder-Abdeck-Element (15) kleiner ist als eine Abmessung (H2) von einem unteren Ende von dem Vorder-Rad (12) zu dem unteren Ende von dem Vorder-Abdeck-Element (15),
in einer Fahrzeug-Vorder-Ansicht ist jede von einer oberen Kante (192) von der rechten Leuchte (19) und einer oberen Kante (182) von der linken Leuchte (18) von einem äußeren Quer-Ende der oberen Kante (192, 182) zu der Mitte des Fahrzeugs in der Fahrzeug-Breiten-Richtung nach unten geneigt,
das Vorder-Abdeck-Element (15) beinhaltet eine erste Vorder-Abdeckung (20) und eine zweite Vorder-Abdeckung (22), die getrennt von der ersten Vorder-Abdeckung (20) ausgebildet ist,
die erste Vorder-Abdeckung (20) ist zumindest teilweise oberhalb der rechten Leuchte (19) und der linken Leuchte (18) angeordnet,
die zweite Vorder-Abdeckung (22) ist zumindest teilweise unter der rechten Leuchte (19) und der linken Leuchte (18) angeordnet,
die zweite Vorder-Abdeckung (22) beinhaltet eine obere Öffnung (220), wobei, in der Fahrzeug-Vorder-Ansicht, die obere Öffnung (220) eine Form hat, die nach unten von der oberen Kante von der zweiten Vorder-Abdeckung (22) ausgenommen ist, und während an der zweiten Vorder-Abdeckung (22) angebracht, deckt die erste Vorder-Abdeckung (20) die obere Öffnung (220) der zweiten Vorder-Abdeckung (22) von einer Vorder-Seite ab,
das zumindest eine Seiten-Abdeck-Element (16, 17) ist an der zweiten Vorder-Abdeckung (22) angebracht, und
die zweite Vorder-Abdeckung (22) beinhaltet einen Zwischen-Abschnitt (227) in der Mitte des Fahrzeugs, in der Fahrzeug-Breiten-Richtung, der Zwischen-Abschnitt (227) erstreckt sich mehr nach oben als ein inneres Quer-Ende einer unteren Kante (193) der rechten Leuchte (19) und eines inneren Quer-Endes einer unteren Kante (183) der linken Leuchte (18),
die zweite Vorder-Abdeckung (22) beinhaltet einen rechten Quer-Abschnitt (226) und einen linken Quer-Abschnitt (225), der rechte Quer-Abschnitt (226) ist rechts von der rechten Leuchte (19) angeordnet, der linke Quer-Abschnitt (225) ist links von der linken Leuchte (18) angeordnet, und
ein oberes Ende des Zwischen-Abschnitts (227) der zweiten Vorder-Abdeckung (22) ist niedriger als ein oberes Ende des linken Quer-Abschnitts (225) und ein oberes Ende des rechten Quer-Abschnitts (226),
die zweite Vorder-Abdeckung (22) beinhaltet einen oberen Abschnitt (224), der über der rechten Leuchte (19) und der linken Leuchte (18) angeordnet ist, und einen unteren Abschnitt (223) der unter der rechten Leuchte (19) und der linken Leuchte (18) angeordnet ist, und der rechte Quer-Abschnitt (226), der linke Quer-Abschnitt (225) und der Zwischen-Abschnitt (227) sind jeweils mit dem oberen Abschnitt (224) und dem unteren Abschnitt (223) gekoppelt,
das Vorder-Abdeck-Element (15) ist vor dem Kopf-Rohr (6) und dem Lenk-Element (13) positioniert,
der linke Rück-Spiegel (26) und der rechte Rück-Spiegel (27) sind an einem Abdeck-Abschnitt (21) der ersten Vorder-Abdeckung (20) angebracht,
eine Abmessung (H3) der ersten Vorder-Abdeckung (20) in einer Fahrzeug-Oben-und-Unten-Richtung ist größer als eine Abmessung (H4) der zweiten Vorder-Abdeckung (22) in der Fahrzeug-Oben-und-Unten-Richtung, **dadurch gekennzeichnet, dass** die zweite Vorder-Abdeckung (22) die Scheinwerfer-Einheit (23) lagert und die Scheinwerfer-Einheit (23) teilweise durch die obere Öffnung (220) der zweiten Vorder-Abdeckung (22) freigelegt ist, während die erste Vorder-Abdeckung (20) von der zweiten Vorder-Abdeckung (22) entfernt ist.

2. Sattel-Reit-Typ-Fahrzeug gemäß Anspruch 1, **dadurch gekennzeichnet, dass** der Zwischen-Abschnitt (227) eine Ausnehmung (227a) beinhaltet, die sich nach hinten erstreckt.

3. Ein Sattel-Reit-Typ-Fahrzeug gemäß Anspruch 1 oder 2, **dadurch gekennzeichnet, dass** der Zwischen-Abschnitt (227) eine Vorder-Fläche beinhaltet, die schräg nach oben nach vorne in der Fahrzeug-Seiten-Ansicht geneigt ist.

4. Ein Sattel-Reit-Typ-Fahrzeug gemäß irgendeinem der Ansprüche 1 bis 3, **dadurch gekennzeichnet, dass** jeder von dem rechten Quer-Abschnitt (226) und dem linken Quer-Abschnitt (225) eine gebogene Form hat.

5. Ein Sattel-Reit-Typ-Fahrzeug gemäß irgendeinem der Ansprüche 1 bis 4, **dadurch gekennzeichnet, dass** die erste Vorder-Abdeckung (20) eine lackierte Komponente ist,
die zweite Vorder-Abdeckung (22) eine un-lackierte Komponente ist,
der linke Quer-Abschnitt (225) von der zweiten Vorder-Abdeckung (22) mehr nach links vor steht als ein linkes Quer-Ende der ersten Vorder-Abdeckung (20), und
der rechte Quer-Abschnitt (226) der zweiten Vorder-Abdeckung (22) mehr nach rechts vor steht als ein rechtes Quer-Ende der ersten Vorder-Abdeckung (20).

6. Ein Sattel-Reit-Typ-Fahrzeug gemäß irgendeinem der Ansprüche 1 bis 5, **dadurch gekennzeichnet, dass** jeder von den rechten Quer-Abschnitt (226) und dem linken Quer-Abschnitt (225) eine Ausnehmung (226a, 225a) beinhaltet.

7. Ein Sattel-Reit-Typ-Fahrzeug gemäß irgendeinem der Ansprüche 1 bis 6, **dadurch gekennzeichnet, dass** der obere Abschnitt (224) der zweiten Vorder-Abdeckung (22) zumindest teilweise mit der ersten Vorder-Abdeckung (20) in der Fahrzeug-Vorder-Ansicht überlappt.

8. Ein Sattel-Reit-Typ-Fahrzeug gemäß irgendeinem der Ansprüche 1 bis 7, **dadurch gekennzeichnet, dass** jede der rechten Leuchte (19) und der linken Leuchte (18) eine Vorder-Fläche beinhaltet, die schräg nach oben nach vorne in einer Fahrzeug-Seiten-Ansicht neigt.

9. Ein Sattel-Reit-Typ-Fahrzeug gemäß irgendeinem der Ansprüche 1 bis 8, **dadurch gekennzeichnet, dass** ein oberes Ende der ersten Vorder-Abdeckung (20) höher angeordnet ist, als ein oberes Ende der zweiten Vorder-Abdeckung (22).

10. Ein Sattel-Reit-Typ-Fahrzeug gemäß irgendeinem der Ansprüche 1 bis 9, **dadurch gekennzeichnet, dass** die erste Vorder-Abdeckung (20) eine Windschutzscheibe (25) beinhaltet.

11. Ein Sattel-Reit-Typ-Fahrzeug gemäß irgendeinem der Ansprüche 1 bis 10, **dadurch gekennzeichnet, dass** ein erstes Seiten-Abdeck-Element (16) und ein zweites Seiten-Abdeck-Element (17) jeweils an dem Vorder-Abdeck-Element (15) angebracht ist, sich jeweils von dem Vorder-Abdeck-Element (15) nach hinten erstrecken und quer außerhalb von zumindest einem Abschnitt des Motors (5) positioniert sind,
das erste Seiten-Abdeck-Element (16) und das zweite Seiten-Abdeck-Element (17) sind an der zweiten Vorder-Abdeckung (22) angebracht.

## Revendications

1. Véhicule de type à selle, comprenant un élément de capot avant (15);
une unité de phare (23) comprenant une paire de feux droit et gauche (19, 18) disposés dans l'élément de capot avant (15);
un rétroviseur gauche (26) et un rétroviseur droit (27);
un tuyau de tête (6) étant disposé au centre du véhicule dans le sens de la largeur du véhicule;
un dispositif de fourche avant (11) comprenant un arbre de direction (30) introduit dans le tuyau de tête (6) et
s'étendant davantage vers le bas que le tuyau de tête (6);
un élément de poignée (13) étant connecté à l'arbre de direction (30);
une roue avant (12) étant supportée par le dispositif de fourche avant (11); un moteur (5) étant disposé à l'arrière de la roue avant (12);
au moins un élément de capot latéral (16, 17) étant fixé à l'élément de capot avant (15),
s'étendant vers l'arrière à partir de l'élément de capot avant (15) et étant disposé latéralement vers l'extérieur d'au moins une partie du moteur (5), dans lequel une dimension (H1) d'une extrémité inférieure de l'élément de capot avant (15) à une extrémité supérieure de l'élément de capot avant (15) est inférieure à une dimension (H2) d'une extrémité inférieure de la roue avant (12) à l'extrémité inférieure de l'élément de capot avant (15),
dans une vue de face de véhicule, chacun d'un bord supérieur (192) du feu droit (19) et d'un bord supérieur (182) du feu gauche (18) s'incline vers le bas à partir d'une extrémité latérale externe du bord supérieur (192, 182) vers le milieu du véhicule dans le sens de la largeur du véhicule,
l'élément de capot avant (15) comprend un premier capot avant (20) et un second capot avant (22) formé séparément du premier capot avant (20),
le premier capot avant (20) est au moins partiellement situé au-dessus du feu droit (19) et du feu gauche (18),
le second capot avant (22) est au moins partiellement situé au-dessus du feu droit (19) et du feu gauche (18),
le second capot avant (22) comprend une ouverture supérieure (220), dans laquelle, dans la vue avant du véhicule, l'ouverture supérieure (220) est de forme en retrait vers le bas depuis le bord supérieur du second capot avant (22) et tout en étant fixé au second capot avant (22), le premier capot avant (20) recouvre l'ouverture supérieure (220) du second capot avant (22) depuis un côté avant, ledit au moins un élément de capot latéral (16, 17) est fixé au second élément de capot avant (22), et
le second capot avant (22) comprend une partie intermédiaire (227) au centre du véhicule dans le sens de la largeur du véhicule, la partie intermédiaire (227) s'étendant davantage vers le haut qu'une extrémité latérale interne d'un bord inférieur (193) du feu droit (19) et une extrémité latérale interne d'un bord inférieur (183) du feu gauche (18),
le second capot avant (22) comprend une partie latérale droite (226) et une partie latérale gauche (225), la partie latérale droite (226) étant située à droite du feu droit (19), la partie latérale gauche (225) étant située à gauche du feu gauche (18), et une extrémité supérieure de la partie intermédiaire (227) du second capot frontal (22) est située plus bas qu'une extrémité supérieure de la partie latérale gauche (225) et une extrémité supérieure de la partie latérale droite (226),
le second capot avant (22) comprend une partie supérieure (224) située au-dessus du feu droit (19) et du feu gauche (18) et une partie inférieure (223) située sous le feu droit (19) et le feu gauche (18), et la partie latérale droite (226), la partie latérale gauche (225) et la partie intermédiaire (227) couplent respectivement la partie supérieure (224) et la partie inférieure (223),
l'élément de capot avant (15) est disposé à l'avant du tuyau de tête (6) et de l'élément de poignée (13),
le rétroviseur gauche (26) et le rétroviseur droit (27) sont fixés à une partie de capot (21) du premier capot avant (20),
une dimension (H3) du premier capot avant (20) dans une direction de haut en bas du véhicule est supérieure à une dimension (H4) du second capot avant (22) dans la direction de haut en bas du véhicule,
**caractérisé en ce que**
le second capot avant (22) supporte l'unité de phare (23) et
l'unité de phare (23) est partiellement exposée à travers l'ouverture supérieure (220) du second capot avant (22), tandis que le premier capot avant (20) est détaché du second capot avant (22).

2. Véhicule de type à selle selon la revendication 1, **caractérisé en ce que** la partie intermédiaire (227) comprend un évidement (227a) s'étendant vers l'arrière.

3. Véhicule de type à selle selon les revendications 1 ou 2, **caractérisé en ce que** la partie intermédiaire (227) comprend une surface avant inclinée obliquement de haut vers l'avant dans une vue latérale du véhicule.

4. Véhicule de type à selle selon l'une quelconque des revendications 1 à 3, **caractérisé en ce que** chacune de la partie latérale droite (226) et de la partie latérale gauche (225) est d'une forme courbée.

5. Véhicule de type à selle selon l'une quelconque des revendications 1 à 4, **caractérisé en ce que** le premier capot avant (20) est un composant peint, le second capot avant (22) est un composant non peint,
la partie latérale gauche (225) du second capot avant (22) dépasse plus à gauche qu'une extrémité latérale gauche du premier capot avant (20), et
la partie latérale droite (226) du second capot avant (22) dépasse plus à droite qu'une extrémité latérale droite du premier capot avant (20).

6. Véhicule de type à selle selon l'une quelconque des revendications 1 à 5, **caractérisé en ce que** chacune de la partie latérale droite (226) et de la partie latérale gauche (225) comprend un évidement (226a, 225a).

7. Véhicule de type selle de roulement selon l'une quelconque des revendications 1 à 6, **caractérisé en ce que** la partie supérieure (224) du second capot avant (22) chevauche au moins partiellement le premier capot avant (20) dans la vue avant du véhicule.

8. Véhicule de type à selle selon l'une quelconque des revendications 1 à 7, **caractérisé en ce que** chacun du feu droit (19) et du feu gauche (18) comprend une surface avant inclinée obliquement de haut vers l'avant dans une vue latérale du véhicule.

9. Véhicule de type à selle selon l'une des revendications 1 à 8, **caractérisé en ce que** l'extrémité supérieure du premier capot avant (20) est située plus haut qu'une extrémité supérieure du second capot avant (22).

10. Véhicule de type à selle selon l'une quelconque des revendications 1 à 9, **caractérisé en ce que** le premier capot avant (20) contient un écran de pare-brise (25).

11. Véhicule de type à selle selon l'une quelconque des revendications 1 à 10, **caractérisé en ce qu'**un premier élément de capot latéral (16) et un second élément de capot latéral (17) sont respectivement fixés à l'élément de capot avant (15), s'étendant respectivement vers l'arrière à partir de l'élément de capot avant (15) et étant disposés latéralement vers l'extérieur latéralement dudit au moins une partie du moteur (5),
le premier élément de capot latéral (16) et le second élément de capot latéral (17) sont fixés au second capot avant (22).
